**Europäisches Patentamt**

**European Patent Office**

**Office européen des brevets**

(11) Veröffentlichungsnummer: **0 038 941**
**A1**

(12) ## EUROPÄISCHE PATENTANMELDUNG

(21) Anmeldenummer: **81102322.5**

(22) Anmeldetag: **27.03.81**

(51) Int. Cl.³: **G 03 B 23/00**

(30) Priorität: **25.04.80 DE 3015943**

(43) Veröffentlichungstag der Anmeldung:
**04.11.81 Patentblatt 81/44**

(84) Benannte Vertragsstaaten:
**AT BE CH FR GB IT LI LU NL SE**

(71) Anmelder: **Rollei-Werke Franke & Heidecke GmbH + Co KG
Salzdahlumer Strasse 196
D-3300 Braunschweig(DE)**

(72) Erfinder: **Dieckhöner, Bernd
Buchhorstblick 14
D-3302 Cremlingen 1(DE)**

(72) Erfinder: **Hamm, Heinz
Militschstrasse 61
D-3300 Braunschweig(DE)**

(72) Erfinder: **Friedrich, Heinz
Stralsundstrasse 5
D-3300 Braunschweig(DE)**

(72) Erfinder: **Sobotta, Reinhard, Ing. grad.
Schreiberkamp 9
D-3300 Braunschweig(DE)**

(74) Vertreter: **Gramm, Werner, Dipl.-Ing. et al,
Patentanwälte Gramm + Lins Theodor-Heuss-Strasse 2
D-3300 Braunschweig(DE)**

(54) Fernbedienungseinrichtung.

(57) Die Erfindung betrifft eine Fernbedienungseinrichtung z.B. für Diaprojektoren oder Fernsehgeräte. Als neu wird in erster Linie angesehen, daß an dieser Fernbedienungseinrichtung nachträglich eine Beleuchtungsvorrichtung (1) angebracht werden kann, die die Bedienungselemente mit einer Flutlichtleiste (6) beleuchtet.

Fig. 1

EP 0 038 941 A1

Croydon Printing Company Ltd.

Prof. Dipl.-Ing. Werner Gramm
Dipl.-Phys. Edgar Lins
Theodor-Heuss-Straße 2
3300 Braunschweig

0038941

ROLLEI - WERKE

Franke & Heidecke

GmbH & Co KG

Braunschweig

Braunschweig,26.3.1981

240-53 EP-1.

Fernbedienungseinrichtung

Die Erfindung bezieht sich auf eine Fernbedienungseinrichtung mit einem Bedienungselementenfeld.

In zahlreichen Ausführungsformen sind Fernbedienungseinrichtungen für verschiedene Geräte bekannt, so z. B. für Diaprojektoren, Fernsehgeräte und Tonanlagen. Bei Diaprojektoren lassen sich Funktionen wie z. B. Bildschärfe, Vorwärts-/Rückwärtsprojektion, Diawechsel und Projektionslicht fernbedienen. Bei Fernsehgeräten sind Funktionen wie z. B. Ein-Aus, Programmwechsel und Lautstärke fernbedienbar. Da z. B. bei der Diaprojektion das Umgebungslicht meist sehr schwach ist, kommen dadurch Fehlbedienungen über die Fernbedienungseinrichtung vor, und zwar steigend mit der Anzahl der fernbedienbaren Funktionen.

Der Erfindung liegt daher die Aufgabe zugrunde, eine Fernbedienungseinrichtung zu schaffen, die bei schwachem oder gar keinem Umgebungslicht eine sichere Funktionszuordnung von Bedienungselementen ermöglicht.

Diese Aufgabe wird erfindungsgemäß durch den Gegenstand des Hauptanspruchs gelöst. Weitere Ausgestaltungen der Erfindung ergeben sich aus den Unteransprüchen.

Eine Ausführungsform der Beleuchtungsvorrichtung ergibt sich durch eine im schrägen Winkel auf das Bedienungselementenfeld gerichteten Flutlichtleiste, die über einen Schalter mit einer Stromversorgung verbunden ist, womit vorteilhafterweise eine herkömmliche Fernbedienungseinrichtung auch bei schwachem oder keinem Umgebungslicht sicher bedienbar ist.

Eine vorteilhafte Ausgestaltung ist darin zu erblicken, daß die Beleuchtungsvorrichtung an eine Fernbedienungseinrichtung zentriert ansetzbar ist und damit in schneller Handhabung eine Beleuchtung des Bedienungselementenfeldes ermöglicht.

In einem besonderen Ausführungsbeispiel ist vorgesehen, daß die Beleuchtungseinrichtung Kontaktstifte für die Stromversorgung aufweist, die mit entsprechenden Buchsen der Fernbedienungseinrichtung bei zentriertem Ansetzen in lösbarer Verbindung stehen, wobei in vorteilhafter Weise die Flutlichtleiste aus der Fernbedienungseinrichtung über die Buchsen die Stromversorgung erhält und dadurch als relativ leichter und dünner Klipp ausgeformt werden kann. Dadurch ist das Raumvolumen der Fernbedienung insgesamt nur unwesentlich vergrößert.

Durch eine weitere Ausgestaltung der Erfindung weist die Beleuchtungsvorrichtung einen eigenen Batterieraum für die Stromversorgung auf, wodurch das Flutlicht unabhängig von der Stromversorgung der Fernbedienungseinrichtung ist, d. h. deren Energieversorgung nicht belastet und damit die Funktionssicherheit insgesamt erhöht.

Eine weitere vorteilhafte Ausgestaltung obiger Einrichtung ergibt sich durch einen über einen Tastschalter betätigbaren Lichtzeiger, wodurch die Beleuchtungsvorrichtung eine weitere Funktion erhält, die bei der Fernbedienung selbst vom Käufer nicht unbedingt mitgekauft werden muß.

In einer besonderen Ausgestaltung ist mit dem Schalter ein elektronisches Zeitglied gekoppelt, das in vorteilhafter Weise das Licht nach Betätigen des Schalters nach Ablauf einer bestimmten Zeit wieder ausschaltet und damit die Handhabung erleichtert.

In einem weiteren Ausführungsbeispiel ist der Schalter mit der Flutlichtleiste elastisch betätigbar und hat damit vorteilhafterweise über den gesamten Flutlichtleistenkörper eine Betätigungsfläche. In einer Weiterbildung ließe sich der Schalter auch formelastisch betätigen.

Die Erfindung kann derart ausgeführt werden, daß die die Fernbedienungseinrichtung tragende Fläche der Beleuchtungsvorrichtung vorteilhaft mit einer Adhäsionsfolie versehen ist und damit nachträglich in Ausführungs- und Funktionsart unterschiedliche Fernbedienungseinrichtungen verwendbar ist.

Bei einem besonderen Ausführungsbeispiel ist vorgesehen, daß die Beleuchtungsvorrichtung vom Innern der Fernbedienungseinrichtung her mittels einer oder mehrerer Lichtquellen das Bedienungselementenfeld mindestens im Bereich der Bedienungselemente mit Licht beaufschlagt, wobei es in diesem Bereich lichtdurchlässig, z. B. vorteilhaft in Form von um die Bedienungselemente herumgeführten Markierungen und den dazu für die Kennzeichnung entsprechenden Symbolen, ist. Gegenüber der Flutlichtausführung ist hier von Vorteil, daß eine kontrastreichere Ablesbarkeit der Bedienungselemente erreicht wird und das Äußere der Fernbedienungseinrichtung erhalten bleibt.

Ein weiteres Merkmal der Erfindung ist darin zu erblikken, daß das Licht mittels eines oder mehrerer an den Seitenteilen der Fernbedienungseinrichtung angebrachten elektronischen Berührungsschalter steuerbar ist, damit in vorteilhafter Weise die Beleuchtungseinrichtung nur für eine Verweildauer in einer Hand kontaktlos eingeschaltet ist.

In einer weiteren Ausbildung ist mittels eines Lichtsensors die Lichtintensität des Flutlichts und der Lichtquelle im Innern der Fernbedienungseinheit regelbar und paßt sich damit vorteilhaft umgekehrt proportional dem Umgebungslicht an. Der Bedienende wird dadurch nicht mehr als nötig durch die Erleichterung in der Funktionszuordnung in seinen eigentlichen visuellen oder auditiven Tätigkeiten behindert.

Vorteilhaft ist auch die Ausführung der Erfindung gemäß Anspruch 13, wobei elektrisch leitende Berührungsflächen aus einem Oberteil und elektrisch isoliert dazu aus einem Unterteil der Fernbedienungseinrichtung gebildet sind und dadurch separate Berührungsflächen eingespart werden sowie auch der Fertigungsaufwand erleichtert wird.

Als besondere Ausbildung ist der Schalter ein auf eine sich nähernde Hand reagierender elektronischer Näherungsschalter, wobei in besonders vorteilhafter Weise schon vor dem Berühren der Fernbedienungseinrichtung die Beleuchtungsvorrichtung wirksam wird und damit eine frühzeitige und sichere Orientierung zu den Bedienungselementen hin erreicht wird.

Im folgenden wird die Erfindung anhand mehrerer Ausführungsbeispiele in den Zeichnungen näher erläutert.

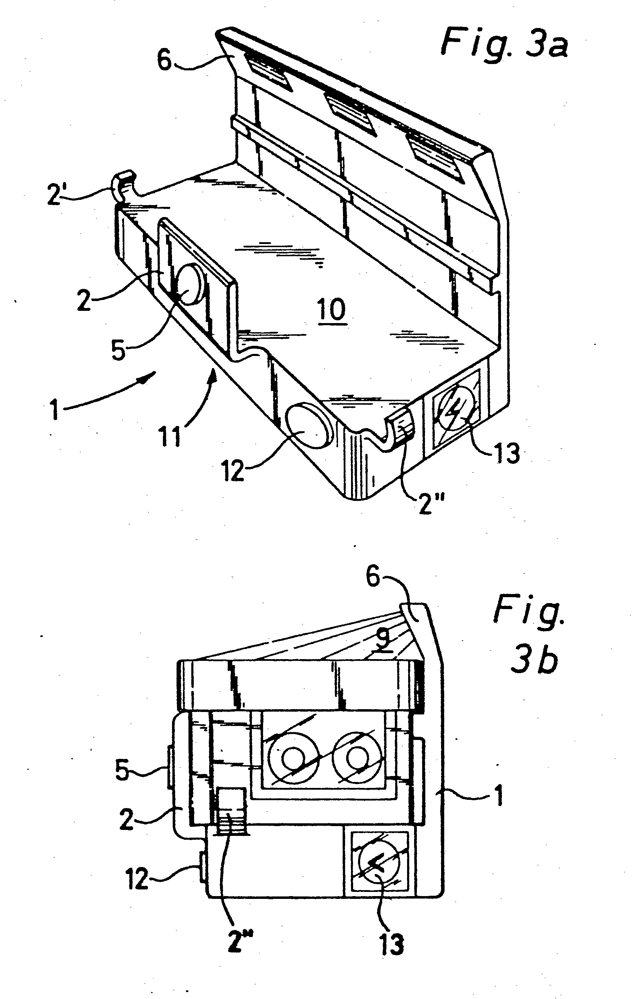

Es zeigen mit Ausnahme von Fig. 3 b in perspektivischer
Darstellung

Fig. 1    eine Beleuchtungsvorrichtung mit Halte-
          klammern und mit Kontaktstiften für eine
          Stromversorgung einer Flutlichtleiste,

Fig. 2    eine an eine Fernbedienungseinrichtung
          angesetzte Beleuchtungsvorrichtung,

Fig. 3 a  eine Beleuchtungseinrichtung ähnlich der

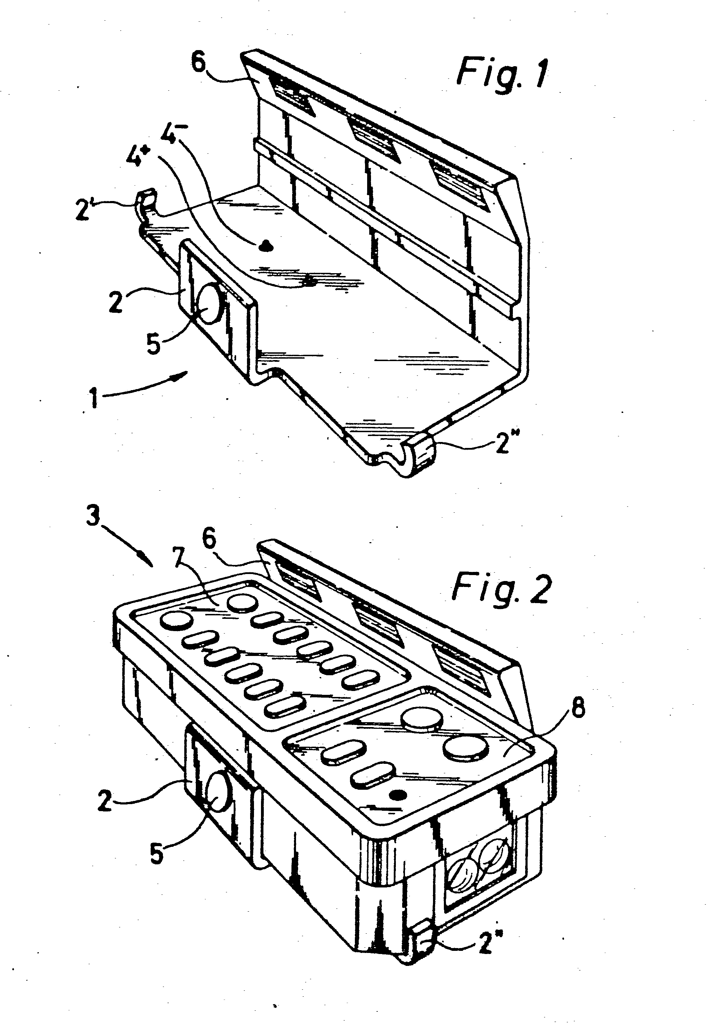

          in Fig. 1 dargestellten, jedoch zusätzlich mit einem Batterieraum und einem
          Lichtzeiger,

Fig. 3 b  eine Seitenansicht von Fig. 3 a,

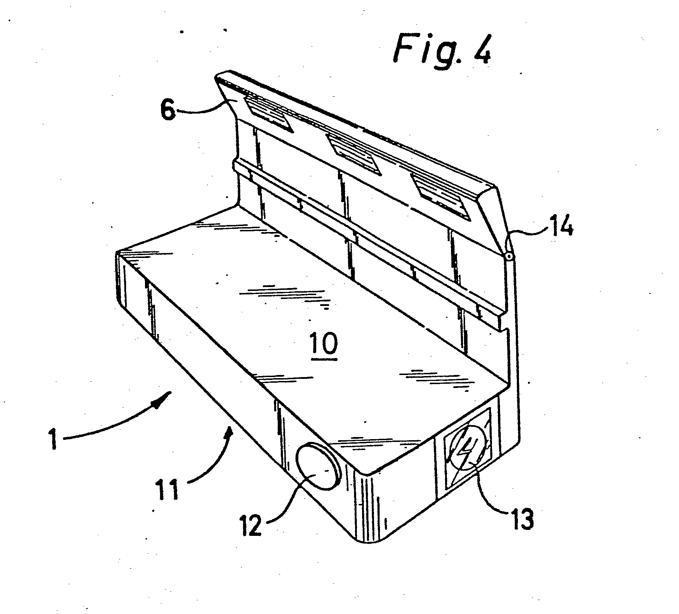

Fig. 4    eine Beleuchtungseinrichtung ähnlich
          Fig. 3 a und 3 b mit einer auf eine
          Tragfläche für eine Fernbedienungs-
          einrichtung versehenen Adhäsionsfo-
          lie und einem mit der Flutlichtleiste
          elastisch betätigbaren Schalter,

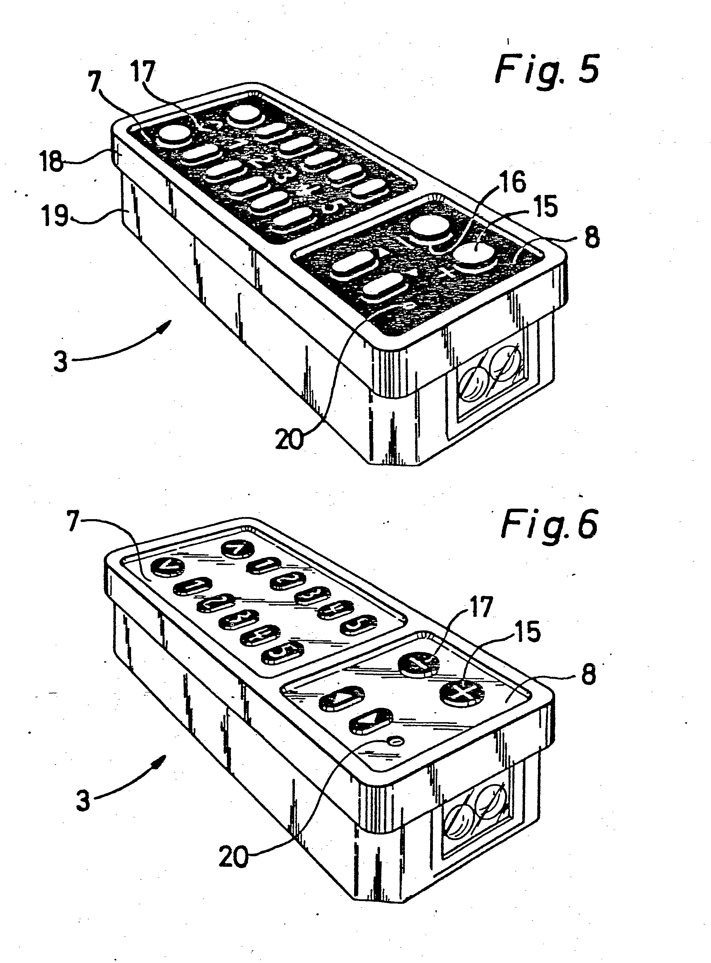

Fig. 5    eine Beleuchtungsvorrichtung mit um und
          an Bedienungselementen lichtdurchlässigen Markierungen und Symbolen,

Fig. 6    eine Beleuchtungsvorrichtung mit Bedie-
          nungselementen, die mit lichtdurchlässi-
          gen Symbolen versehen sind.

Fig. 1 zeigt eine Beleuchtungsvorrichtung 1 mit Halteklammern 2, 2', 2" zum zentrierten Ansetzen an eine Fernbedienungseinrichtung (nicht dargestellt). Die Kontaktstifte 4+ und 4- dienen zur Übertragung einer Stromversorgung über einen Schalter 5 für eine Flutlichtleiste 6.
Eine Stromversorgung kann über entsprechende Kontaktierungen an einer Fernbedienungseinrichtung entnommen werden.

Durch die mit den Halteklammern 2, 2', 2" zentriert angesetzte Beleuchtungsvorrichtung 1 an die Fernbedienungseinrichtung 3 nach Fig. 2 sind Bedienungselementenfelder 7, 8
beleuchtbar, wobei mit einem Schalter 5 das Licht der
Flutlichtleiste 6 schaltbar ist. Die Handlichkeit der
Fernbedienungseinrichtung 3 bleibt weiterhin erhalten.

Fig. 3 a weist zusätzlich zu Fig. 1 und 2 unterhalb einer
Tragfläche 10 für die Fernbedienungseinrichtung 3 einen
Batterieraum 11 sowie einen über einen Tastschalter 12 betätigbaren Lichtzeiger 13, vorteilhaft besonders in Verbindung mit einem Diaprojektor, auf und ist damit unabhängig von einer externen Stromversorgung. Entsprechend
fehlen hier die für eine externe Stromversorgung vorgesehenen Kontaktstifte. Die Zuordnung des Schalters 5 für
die Flutlichtleiste 6 und des Tastschalters 12 für den
Lichtzeiger 13 ist nach ergonomischen Gesichtspunkten
nicht an dieses Ausführungsbeispiel gebunden.

Aus der in Fig. 3 b dargestellten Seitenansicht der Fernbedienungseinrichtung 3 mit der angesetzten Beleuchtungsvorrichtung 1 geht der Strahlengang des Flutlichts 9 von
der Flutlichtleiste 6, die die Bedienungsfreiheit nicht
einschränkt, hervor. Die Handlichkeit der Fernbedienungseinrichtung 3 bleibt mit der angesetzten Beleuchtungsvorrichtung 1 erhalten.

Die Tragfläche 10 für die Fernbedienungseinrichtung 3
in Fig. 4 weist eine Adhäsionsfolie auf, wodurch die Beleuchtungseinrichtung 1 universell an verschiedene Ausführungsformen von Fernbedienungseinrichtungen 3 ansetzbar ist. In dieser besonderen Ausführungsform ist der innerhalb der Flutlichtleiste 6 liegende nicht dargestellte Schalter 5 mit der Flutlichtleiste 6 um eine Achse 14 elastisch betätigbar.

Eine andere Ausführungsart der Beleuchtungsvorrichtung 1 ist in Fig. 5 dargestellt. Hierbei werden vom Innern der Fernbedienungseinrichtung 3 her die Bedienungselementenfelder 7, 8 von einer oder mehreren Lichtquellen mit Licht beaufschlagt, wobei nur die um die Bedienungselemente 15 herumführenden Markierungen 16 und die entsprechenden Symbole 17 dazu lichtdurchlässig sind. Es wird erreicht, daß Direktlicht nur die Markierungen 16 und die dazu gehörenden Symbole 17 passiert und dadurch kontrastreiche, gut erkennbare Bedienungselemente 15 erzielt werden.

Elektrisch leitende Berührungsflächen für einen elektronischen Berührungsschalter sind aus einem Gehäuseoberteil 18 und isoliert dazu aus einem Gehäuseunterteil 19 gebildet.

Zwecks Anpassung an das jeweilige Umgebungslicht regelt ein Lichtsensor 20 die Lichtintensität der lichtdurchlässigen Markierungen 16 und Symbole 17. Bei hellem Umgebungslicht, wenn die Bedienungselemente ausreichend sicher in der Zuordnung bedienbar sind, regelt sich die Lichtintensität auf Null, wodurch die Stromversorgung nicht unnötig belastet werden kann.

In Fig. 6 sind die Symbole 17 direkt auf die Bedienungselemente 15 aufgebracht, die in diesem Fall lichtdurchlässig ausgebildet sind. Die Markierungen 16 entfallen wegen Übereinstimmung der Symbole 17 mit den Bedienungselementen 15. Durch Fingerdruck auf ein Symbol wird zugleich das entsprechende Bedienungselement betätigt, was zur Bedienungssicherheit und Bedienungserleichterung beiträgt.

Patentanwälte
Prof. Dipl.-Ing. Werner Gramm
Dipl.-Phys. Edgar Lins
Theodor-Heuss-Straße 2
3300 Braunschweig

0038941

ROLLEI - WERKE

Braunschweig, 26.3.1981

Franke & Heidecke

240-53 EP-1

GmbH & Co KG

Braunschweig

Patentansprüche

1. Fernbedienungseinrichtung mit einem Bedienungselementenfeld, gekennzeichnet durch eine das gesamte Bedienungselementenfeld (7, 8) mit Licht beaufschlagende Beleuchtungsvorrichtung (1).

2. Fernbedienungseinrichtung nach Anspruch 1, dadurch gekennzeichnet, daß die Beleuchtungsvorrichtung (1) mit einer im schrägen Winkel auf das Bedienungselementenfeld (7, 8) gerichteten Flutlichtleiste (6), die über einen Schalter (5) mit einer Stromversorgung verbunden ist, versehen ist.

3. Fernbedienungseinrichtung nach Anspruch 1 und 2, dadurch gekennzeichnet, daß die Beleuchtungsvorrichtung (1) an eine Fernbedienungseinrichtung (3) zentriert ansetzbar ist.

4. Fernbedienungseinrichtung nach Anspruch 1-3, dadurch gekennzeichnet, daß die Beleuchtungsvorrichtung (1) Kontaktstifte (4+, 4-) für die Stromversorgung aufweist, die mit entsprechenden Buchsen der Fernbedienungseinrichtung (3) bei zentriertem Ansetzen in lösbarer Verbindung stehen.

5. Fernbedienungseinrichtung nach Anspruch 1-4, dadurch gekennzeichnet, daß die Beleuchtungsvorrichtung (1) einen Batterieraum (11) für die Stromversorgung aufweist.

6.    Fernbedienungseinrichtung nach Anspruch 1-5, dadurch
gekennzeichnet, daß die Beleuchtungsvorrichtung (1)
einen über einen Tastschalter (12) betätigbaren Lichtzeiger (13) aufweist.

7.    Fernbedienungseinrichtung nach Anspruch 1-6, dadurch
gekennzeichnet, daß mit dem Schalter (5) ein elektronisches Zeitglied derart gekoppelt ist, daß nach einem
vorgegebenen Zeitablauf das Flutlicht (9) für das Bedienungselementenfeld (7, 8) wieder erlischt.

8.    Fernbedienungseinrichtung nach Anspruch 1-7, dadurch
gekennzeichnet, daß der innerhalb der Flutlichtleiste(6)
liegende Schalter (5) für das Flutlicht (9) mit
der Flutlichtleiste (6) elastisch betätigbar ist.

9.    Fernbedienungseinrichtung nach Anspruch 1, 2, 5-8, dadurch gekennzeichnet, daß eine Adhäsionsfolie an den
Berührungsebenen zwischen Fernbedienungseinrichtung (3)
und Beleuchtungsvorrichtung (1) beide Teile
in lösbarer Verbindung hält.

10.   Fernbedienungseinrichtung nach Anspruch 1, dadurch
gekennzeichnet, daß die Beleuchtungsvorrichtung (1)
vom Innern der Fernbedienungseinrichtung (3) her mittels einer oder mehrerer Lichtquellen das Bedienungselementenfeld (7, 8) mindestens im Bereich der Bedienungselemente (15) mit Licht beaufschlagt, wobei es
in diesem Bereich lichtdurchlässig ist.

11. Fernbedienungseinrichtung nach Anspruch 10, dadurch gekennzeichnet, daß das Licht mittels eines oder mehrerer an den Seitenflächen der Fernbedienungseinrichtung (3) angebrachten elektronischen Berührungsschalters steuerbar ist.

12. Fernbedienungseinrichtung nach Anspruch 11, dadurch gekennzeichnet, daß mittels eines Lichtsensors (20) die Lichtintensität des Lichts regelbar ist.

13. Fernbedienungseinrichtung nach Anspruch 11 und 12, dadurch gekennzeichnet, daß elektrisch leitende Berührungsflächen aus einem Gehäuseoberteil (18) und elektrisch isoliert dazu aus einem Gehäuseunterteil (19) der Fernbedienungseinrichtung (3) gebildet sind.

14. Fernbedienungseinrichtung nach Anspruch 2-13, dadurch gekennzeichnet, daß der Schalter (5) ein auf eine sich nähernde Hand reagierender elektronischer Näherungsschalter ist.

Patentanwälte
G r a m m + L i n s

Fig. 1

Fig. 2

0038941

*Fig. 3a*

*Fig. 3b*

*Fig. 4*

*Fig. 5*

*Fig. 6*

**Europäisches Patentamt**

**EUROPÄISCHER RECHERCHENBERICHT**

**0038941**
Nummer der Anmeldung

**EP 81 10 2322**

| EINSCHLÄGIGE DOKUMENTE | | | KLASSIFIKATION DER ANMELDUNG (Int. Cl. ³) |
|---|---|---|---|
| Kategorie | Kennzeichnung des Dokuments mit Angabe, soweit erforderlich, der maßgeblichen Teile | betrifft Anspruch | |
| | US - A - 3 078 788 (R.F. McCAMMON)  * Spalte 2, Zeilen 21-72; Spalte 3, Zeilen 1-45; Figuren 1-5 *  -- | 1,6 | G 03 B 23/00 |
| A | DE - A - 2 622 379 (AGFA-GEVAERT AG)  * Seite 6, Zeilen 13-20; Figuren 1,2 *  -- | 1,10 | |
| A | US - A - 3 225 652 (N.A. SAUPPE)  * Spalte 7, Zeilen 48-75; Spalte 8, Zeilen 1-25; Figur 3 *  ----- | 1,10 | **RECHERCHIERTE SACHGEBIETE (int. Cl.³)**  G 03 B 9/00 H 01 J 9/00- 9/06 G 12 B 11/00 H 04 M 1/22 |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-08-1981 | BOEYKENS |

EPA form 1503.1   06.78